# EUROPÄISCHE PATENTSCHRIFT

(11) **EP 4 308 438 B1**
(45) Veröffentlichungstag und Bekanntmachung des Hinweises auf die Patenterteilung: **04.03.2026**
(21) Anmeldenummer: 22715006.7
(22) Anmeldetag: 14.03.2022
(51) Int. Cl.: B62D 35/00, B62D 37/02

(54) **VERFAHREN UND SYSTEM ZUM STEUERN EINER ABDECKUNG SOWIE LASTKRAFTWAGEN-GESPANN**
METHOD AND SYSTEM FOR CONTROLLING A COVER AND TRUCK-TRAILER COMBINATION
PROCÉDÉ ET SYSTÈME DE COMMANDE D'UN CARÉNAGE ET D'UN ATTELAGE DE CAMIONS

(30) Priorität: 16.03.2021 DE 102021106406
(43) Veröffentlichungstag der Anmeldung: 24.01.2024
(73) Patentinhaber: JOST-Werke Deutschland GmbH, 63263 Neu-Isenburg (DE)
(72) Erfinder: ALGÜERA, José, 63739 Aschaffenburg (DE); GITZEN, Stephan, 64560 Riedstadt (DE); FISCHER, Michael, 72202 Nagold (DE)
(74) Vertreter: WSL Patentanwälte Partnerschaft mbB
(86) Internationale Anmeldenummer: PCT/EP2022/056507
(87) Internationale Veröffentlichungsnummer: WO 2022/194762

(56) Entgegenhaltungen:
- EP-A1- 2 792 579
- WO-A1-2014/133424
- DE-A1- 102009 054 570
- US-A- 4 904 015
- US-A1- 2009 248 242
- US-A1- 2010 072 779
- US-A1- 2011 068 602

## Beschreibung

Die vorliegende Erfindung betrifft ein Verfahren zum Steuern einer Abdeckung, ein System zum Steuern einer Abdeckung und ein Lastkraftwagen-Gespann.

Zur Gruppe der Lastkraftwagen-Gespanne gehören insbesondere Sattelzüge und Gliederzüge. Sattelzüge bestehen aus einer Zugmaschine als ziehendes Fahrzeug und einem Auflieger (auch Trailer genannt) als gezogenes Fahrzeug. Ein Gliederzug umfasst einen Lastkraftwagen als ziehendes Fahrzeug und einen Anhänger als gezogenes Fahrzeug.

Aus dem Stand der Technik ist bekannt, dass sich der zwischen dem ziehenden Fahrzeug und dem gezogenen Fahrzeug befindliche Spaltraum negativ auf den Kraftstoffverbrauch auswirkt. Die US 6,428,084 B1 offenbart daher ein System, welches Abdeckungen umfasst, die den Spaltraum weitgehend verschließen oder bedecken sollen. Eine obere Abdeckung kann mittels eines Zylinders bewegt werden. Das offenbarte System sieht vor, dass immer dann, wenn der Rückwärtsgang eingelegt wird, die obere Abdeckung nach oben bewegt wird, damit die obere Abdeckung bei dem Kupplungsvorgang nicht gegen den Auflieger stößt und beschädigt wird. Anschließend wird die obere Abdeckung nach unten bewegt, wodurch sie sich auf den Auflieger legt.

Die DE 10 2009 054 570 A1 offenbart ein System mit Windabweisern, welche den Spaltraum überbrücken, um Verwirbelungen zwischen einem Zugfahrzeug und einem Anhängerfahrzeug zu minimieren. Es ist auch offenbart, dass der Windabweiser erst ausgeklappt wird, wenn eine in einer Steuereinheit hinterlegte Mindestgeschwindigkeit erreicht wird.

Die DE 10 2014 018 850 A1 offenbart eine Luftführungseinrichtung für ein Nutzfahrzeug, mit wenigstens einem bewegbar an einem Aufbau des Nutzfahrzeugs gehaltenen Luftleitelement, und mit wenigstens einem Aktor, mittels welchem das Luftleitelement relativ zum Aufbau bewegbar ist, wobei eine Sensoreinrichtung vorgesehen ist, mittels welcher wenigstens ein Abstand des Luftleitelements zu einem mit dem Nutzfahrzeug gekoppelten Anhänger erfassbar und ein den erfassten Abstand charakterisierendes Abstandssignal an den Aktor übertragbar ist, mittels welchem das Luftleitelement in Abhängigkeit von dem Abstandssignal bewegbar ist.

Die US 4,904,015 offenbart einen Sattelzug mit einem Luftabweisersystem.

Die WO 2014/133424 A1 offenbart ein System und ein Verfahren zum Verbessern der aerodynamischen Bedingungen um ein Landfahrzeug.

Die EP 2 792 579 A1 offenbart eine Vorrichtung zum Anpassen der Ausrichtung eines aerodynamischen Zusatzes auf der Kabine eines Industriefahrzeugs.

Die bekannten Systeme aus dem Stand der Technik führen zu einer Verringerung des Strömungswiderstandes und des Kraftstoffverbrauchs. Es besteht jedoch Bedarf, die Bedeckung des Spaltraums weiter zu optimieren.

Die Aufgabe der Erfindung bestand somit darin, die negativen Auswirkungen des Spaltraums zwischen einem ziehenden und einem gezogenen Fahrzeug zu verringern.

Die Lösung dieser Aufgabe erfolgt durch das erfindungsgemäße Verfahren.

Erfindungsgemäß wurde erkannt, dass die bekannten Systeme den Spaltraum insbesondere während der Fahrt unzureichend abdecken. Grund hierfür sind vor allem Kurvenfahrten. Während bei der Geradeausfahrt das ziehende und das gezogene Fahrzeug gleich orientiert sind, entsteht bei einer Kurvenfahrt zwischen ziehendem und gezogenem Fahrzeug ein Relativwinkel. Das kann dazu führen, dass die Abdeckung den Spaltraum auf einer Seite nicht mehr ganz abdeckt oder dass die Größe der Abdeckung von vornherein so gewählt werden muss, dass nicht der gesamte Spaltraum abgedeckt wird. In beiden Fällen kommt es während der Fahrt zu Verwirbelungen, was sich negativ auf den Kraftstoffverbrauch auswirkt.

Erfindungsgemäß wird daher eine Relativposition und/oder Relativorientierung zwischen ziehendem Fahrzeug und gezogenem Fahrzeug ermittelt und der Aktuator in Abhängigkeit von der Relativposition und/oder der Relativorientierung angesteuert. Auf diese Weise kann die Abdeckung an verschiedene Situationen während einer Fahrt angepasst werden, wodurch Verwirbelungen in dem Spaltraum weiter verringert und der Kraftstoffverbrauch reduziert wird.

Der Begriff Position bezeichnet im Rahmen der vorliegenden Erfindung den Ort, an dem sich ein Gegenstand im Raum befindet, ohne dass es auf die Orientierung des Gegenstands ankommt. Eine Veränderung der Position wird durch eine translatorische Bewegung verursacht. Der Begriff Orientierung hingegen bezeichnet die Ausrichtung eines Gegenstands im Raum, ohne dass es auf dessen Position ankommt. Eine Veränderung der Orientierung wird durch eine rotatorische Bewegung verursacht. Eine Relativposition kann anhand von Abständen angegeben werden, eine Relativorientierung anhand von Winkeln. In einem kartesischen Koordinatensystem wird die Position durch drei Abstände entlang der Koordinatenachsen x,y,z und die Orientierung durch drei Winkel relativ zu den drei Koordinatenachsen festgelegt. Die Position eines nichtpunktförmigen Gegenstands wird bevorzugt durch seinen Schwerpunkt festgelegt.

Unter einem Verstellen der Abdeckung wird insbesondere eine Veränderung der Position, der Orientierung, der Form oder der Größe der Abdeckung oder Teilen davon verstanden. So kann der Aktuator die Abdeckung oder Teile davon beispielsweise hin- und herbewegen, drehen, kippen, falten, teleskopieren, verschoben, ein- und ausziehen oder aufblasen. Im Allgemeinen wird davon gesprochen, dass die Abdeckung ausgefahren oder eingefahren wird.

Zur Ermittlung der Relativposition und/oder der Relativorientierung wird erfindungsgemäß der Drehwinkel am Kupplungspunkt zwischen ziehendem Fahrzeug und gezogenem Fahrzeug als Primärparameter erfasst.

Zur Ermittlung der Relativposition und/oder der Relativorientierung wird bevorzugt zumindest einer der folgenden Primärparameter erfasst:
- zumindest ein Abstand zwischen den Fahrzeugen
- die absolute Position des ziehenden Fahrzeugs
- die absolute Position des gezogenen Fahrzeugs
- die absolute Orientierung des ziehenden Fahrzeugs
- die absolute Orientierung des gezogenen Fahrzeugs

Der Drehwinkel am Kupplungspunkt ist mittels einer Winkelmesseinrichtung erfasst. Die Winkelmesseinrichtung kann beispielsweise einen Sensor am ziehenden Fahrzeug und Messstreifen an dem gezogenen Fahrzeug umfassen. Ausgehend von der Geradeausfahrt kann somit zu jeder Zeit der Drehwinkel erfasst werden.

Abstände zwischen den Fahrzeugen können beispielsweise mittels Abstandssensoren oder mittels eines optischen Systems, wie einer Kamera oder eines Lidars, erfasst werden. Aus den Abständen kann die Relativposition und/oder die Relativorientierung ermittelt werden. Die Abstände können auch aus geometrischen Angaben der Fahrzeuge (Breite der Fahrzeuge, Höhe der Fahrzeuge, etc.) ermittelt/berechnet werden. Die geometrischen Angaben können beispielsweise in Form eines QR-Codes am gezogenen Fahrzeug hinterlegt sein. Beim Kuppeln wird der QR-Code ausgelesen und aus den geometrischen Angaben beider Fahrzeuge werden dann die Abstände ermittelt und der Aktuator in Abhängigkeit dieser Abstände angesteuert (siehe auch unten).

Die absolute Position der Fahrzeuge kann beispielsweise mittels GPS (Global Positioning System) ermittelt werden. Die absolute Orientierung kann beispielsweise mittels eines Kompass und eines Neigungsmessers ermittelt werden. Aus der absoluten Position oder Orientierung beider Fahrzeuge lässt sich die Relativposition oder die Relativorientierung ermitteln.

Die Abdeckung und der Aktuator sind bevorzugt an dem ziehenden Fahrzeug angeordnet. Bevorzugt wird der Aktuator derart angesteuert, dass die Abdeckung an dem gezogenen Fahrzeug anliegt. Es ist jedoch auch möglich, dass die Abdeckung immer so verstellt wird, dass die Bedeckung des Spaltraums möglichst vollständig ist, die Abdeckung aber keinen Kontakt zum gezogenen Fahrzeug hat. Dadurch wird eine Beschädigung der Abdeckung verhindert. Es ist auch möglich, dass die Abdeckung temporär mit dem gezogenen Fahrzeug verbunden wird, beispielsweise mittels einer Magnetverbindung.

Ein weiterer Grund für eine unzureichende Abdeckung des Spaltraums ist die Tatsache, dass es sowohl im Falle des ziehenden wie auch im Falle des gezogenen Fahrzeugs unterschiedliche Formen von Fahrzeugen gibt. Im Falle eines Aufliegers gibt es beispielsweise Kofferauflieger mit einer Quaderform und Tankauflieger mit einer Zylinderform. Auch kann das gezogene Fahrzeug unterschiedlich breit oder hoch sein. Da regelmäßig ein ziehendes Fahrzeug für unterschiedliche gezogene Fahrzeuge eingesetzt wird, ist es wünschenswert, die Abdeckung an diese Umstände anzupassen. Auch ist es wünschenswert, die Abdeckung an verschiedene Fahrsituationen anzupassen, um immer die optimale Abdeckung des Spaltraums zu erreichen. Bevorzugt ist daher vorgesehen, dass die Ansteuerung des Aktuators in Abhängigkeit zumindest eines der folgenden Sekundärparameter erfolgt:
- ein Parameter der Außenkontur des ziehenden Fahrzeugs
- ein Parameter der Außenkontur des gezogenen Fahrzeugs
- die aktuelle Geschwindigkeit des Gespanns
- die seit Überschreiten eines Grenzwertes der Geschwindigkeit vergangene Zeit
- die Position des Gespanns
- die Temperatur der Umgebung
- der Luftdruck der Umgebung
- der Staudruck an der Stirnseite des ziehenden Fahrzeuges
- der Luftdruck an mindestens einer Flanke des gezogenen Fahrzeugs oder des ziehenden Fahrzeuges
- der Luftdruck im Dachbereich des gezogenen Fahrzeugs oder des ziehenden Fahrzeuges
- der Luftdruck im Spaltraum zwischen dem ziehenden Fahrzeug und dem gezogenen Fahrzeug
- erfasste Verkehrsschilder
- der Bremszustand
- der Lenkzustand

Der Parameter der Außenkontur des ziehenden und/oder des gezogenen Fahrzeugs ist zumindest einer der folgenden:
- Breite des Fahrzeugs
- Höhe des Fahrzeugs
- Form des Fahrzeugs
- Vorhandensein eines Anbaugeräts
- Form des Anbaugeräts
- Größe des Anbaugeräts
- die Position eines Kupplungspunkts an dem Fahrzeug

Die Parameter der Außenkontur ermöglichen es, die Abdeckung so einzustellen, dass sie optimal an die Außenkontur angepasst ist. Ist beispielsweise ein Anbaugerät vorhanden, insbesondere ein Kühlaggregat, so wird die Abdeckung bei einer Kurvenfahrt so verstellt, dass sie nicht mit dem Anbaugerät kollidiert.

Es kann gewünscht sein, die Abdeckung nur in bestimmten Situationen, insbesondere bei langer Geradeausfahrt oder Autobahnfahrt, auszufahren. Anhand der aktuellen Geschwindigkeit des Gespanns, der seit Überschreiten eines Grenzwertes der Geschwindigkeit vergangenen Zeit und/oder der Position des Gespanns kann eine solche Situation erkannt und der Aktuator in Abhängigkeit dieser Parameter angesteuert werden. Auch mittels einer Verkehrsschildererfassung ist das Erkennen einer solchen Situation möglich. Wird beispielsweise ein Verkehrsschild erkannt, das den Beginn einer Autobahn anzeigt, so kann daraus geschlossen werden, dass die Abdeckung auszufahren ist.

Temperatur und Luftdruck haben einen Einfluss auf die Strömung der Luft während der Fahrt. Liegt die Abdeckung an dem gezogenen Fahrzeug an, so kommt es aufgrund der Strömung der Luft zu Abhebekräften, die dem Anliegen der Abdeckung an dem gezogenen Fahrzeug entgegenwirken. Die Größe der Abhebekräfte hängt von der Temperatur und dem Luftdruck ab, sodass es vorteilhaft ist, die Temperatur und/oder den Luftdruck zu ermitteln und diese Parameter bei der Ansteuerung des Aktuators zu berücksichtigen.

Aus dem Bremszustand lässt sich beispielsweise eine Gefahrbremsung erkennen, woraufhin der Aktuator bevorzugt derart angesteuert wird, dass die Abdeckung vollständig eingefahren oder weggeklappt wird.

Der Lenkzustand des ziehenden und/oder des gezogenen Fahrzeugs hat einen Einfluss auf die zukünftige Relativposition und Relativorientierung der beiden Fahrzeuge. Der Lenkzustand umfasst insbesondere Informationen zum Lenkwinkel und/oder Lenkwinkelgradienten des ziehenden Fahrzeuges. Es vorteilhaft, den Lenkzustand bei der Ansteuerung des Aktuators zu berücksichtigen, da so bereits vor der eigentlichen Veränderung von Relativposition und Relativorientierung der Aktuator angesteuert werden kann.

Alternativ oder zusätzlich zu den Parametern kann in der Datenbank auch für jeden Fahrzeugtyp zumindest eine Kennlinie vorgesehen sein, die festlegt, bei welcher Relativposition und/oder Relativorientierung die Abdeckung wie zu verstellen ist oder wie die Aktuatoren anzusteuern sind. Sodann kann die Relativposition und/oder Relativorientierung ermittelt werden und die Aktuatoren werden so angesteuert, wie es durch die Kennlinie vorgegeben ist. Die Datenbank kann in einer Steuereinheit des gezogenen oder des ziehenden Fahrzeuges hinterlegt sein. Die Datenbank kann auch an einem externen Ablageort, auf den das Fahrzeug, beispielsweise über Telematik, Zugriff hat.

Bei einem Kupplungsvorgang kann ein Input generiert werden, welches angibt, welche Fahrzeuge miteinander gekuppelt wurden. Dieser Input kann manuell erfolgen, insbesondere manuell durch den Fahrer mittels eines Eingabegeräts, wie beispielsweise eines Touchscreens in der Fahrzeugkabine. Der Input kann jedoch auch automatisch generiert werden, indem beispielsweise jedes Fahrzeug, insbesondere jedes gezogene Fahrzeug, eine elektronisch auslesbare Information aufweist, beispielsweise einen QR-Code oder eine Information, die in einem RFID-Chip gespeichert ist. Der Input kann auch in einem der Steuergeräte des gezogenen Fahrzeugs hinterlegt sein und über ein CAN System abrufbar sein. Beim Kuppeln wird der Code ausgelesen, insbesondere von einer Steuereinheit des ziehenden Fahrzeugs, und die benötigten Parameter oder Kennlinien werden aus einer Datenbank bezogen. In Folge kann der Aktuator in Abhängigkeit der Parameter und/oder der Kennlinien angesteuert werden.

Die Relativposition und/oder die Relativorientierung werden bevorzugt kontinuierlich ermittelt und der Aktuator wird bevorzugt kontinuierlich in Abhängigkeit von der Relativposition und/oder der Relativorientierung angesteuert. Dadurch wird zu jedem Zeitpunkt sichergestellt, dass die Abdeckung den Spaltraum optimal bedeckt. Unter dem Begriff kontinuierlich wird insbesondere in festgelegten zeitlichen Abständen wiederkehrend verstanden. Die zeitlichen Abstände werden insbesondere derart gewählt, dass sie ausreichend klein sind, um bei der jeweiligen Geschwindigkeit des Gespanns und der Verstelldauer (Reaktionszeit) des Aktuators und der Abdeckung, Schäden am Gespann (inkl. der Abdeckung oder des Aktuators) zu vermeiden.

Bevorzugt sind mehrere Abdeckungen mit jeweils zumindest einem Aktuator vorgesehen, wobei die Aktuatoren unabhängig und/oder unterschiedlich angesteuert werden. So können die Aktuatoren insbesondere derart angesteuert werden, dass eine Abdeckung eingefahren und eine andere Abdeckung ausgefahren wird. Zur gleichen Zeit kann eine dritte Abdeckung beispielsweise nicht verstellt werden.

Der Aktuator wird bevorzugt derart angesteuert, dass die Abdeckung mit einer festgelegten Anpresskraft an dem gezogenen Fahrzeug anliegt. Auf diese Weise wird der Spaltraum verschlossen und leichte Bewegungen der Fahrzeuge während der Fahrt führen nicht unmittelbar zu Spalten in der Bedeckung des Spaltraums. Die Anpresskraft wird bevorzugt in Abhängigkeit zumindest eines der Sekundärparameter festgelegt. Wie oben beschrieben, hängen die Abhebekräfte, welche auf die Abdeckung wirken, insbesondere von der Geschwindigkeit des Fahrzeugs sowie von der Umgebungstemperatur und des Luftdrucks der Umgebung ab. Daher ist es von Vorteil, die Anpresskraft anhand dieser Parameter festzulegen. Besonders bevorzugt wird die Anpresskraft derart gewählt, dass sie die zu erwartenden oder die tatsächlich gemessenen Abhebekräfte übersteigt, insbesondere um mindestens 5% übersteigt. Die Ermittlung der Abhebekräfte kann über eine Luftdruckmessung erfolgen, beispielsweise mittels eines Pitot-Rohrs.

Das erfindungsgemäße System zum Steuern einer Abdeckung, die einen Spaltraum, welcher zwischen einem ziehenden Fahrzeug und einem gezogenen Fahrzeug eines Lastkraftwagen-Gespanns gebildet wird, zumindest teilweise bedeckt, umfasst zumindest einen Aktuator, der zum Verstellen der Abdeckung eingerichtet ist. Das System umfasst eine mit dem Aktuator verbundene Steuereinheit, die eingerichtet ist, eine Relativposition und/oder eine Relativorientierung zwischen ziehendem Fahrzeug und gezogenem Fahrzeug zu ermitteln und den Aktuator in Abhängigkeit der Relativposition und/oder der Relativorientierung anzusteuern.

Der Aktuator kann elektrisch, elektromagnetisch, pneumatisch, hydraulisch oder mechanisch betätigt werden. Der Aktuator kann beispielsweise ein Stellmotor, ein Hydraulik- oder Pneumatikzylinder oder eine Aufblaseinrichtung für die Abdeckung sein. Der Aktuator ist mit der Abdeckung verbunden, damit er sie verstellen kann, beispielsweise über ein Gestänge.

Die Abdeckung kann einteilig oder mehrteilig sein. Insbesondere kann die Abdeckung aufblasbar oder teleskopierbar sein. Die Abdeckung kann auch ein ausziehbares Rollo oder ein Faltenbalg sein.

Das System umfasst erfindungsgemäß eine Winkelmesseinrichtung, welche die Orientierung von ziehendem und gezogenem Fahrzeug oder die Relativorientierung von ziehendem und gezogenem Fahrzeug erfasst. Die Winkelmesseinrichtung kann beispielsweise einen Sensor am ziehenden Fahrzeug und Messstreifen an dem gezogenen Fahrzeug umfassen. Ausgehend von der Geradeausfahrt kann somit zu jeder Zeit der Drehwinkel erfasst werden. Die Winkelmesseinrichtung kann auch einen Kompass und Neigungsmesser umfassen. Eine Winkelmesseinrichtung ist eine kostengünstige Möglichkeit, die Relativorientierung der Fahrzeuge zu ermitteln. Die Winkelmesseinrichtung ist mit der Steuereinheit verbunden.

Das System kann auch Abstandssensoren und/oder ein optisches System, wie eine Kamera oder ein Lidar, umfassen, mittels denen Abstände zwischen den Fahrzeugen erfasst werden. Aus den Abständen kann die Relativposition und/oder die Relativorientierung ermittelt werden. Die Abstandssensoren und/oder das optische System sind mit der Steuereinheit verbunden.

Das System umfasst bevorzugt eine Sensoreinrichtung, welche eingerichtet ist, die Temperatur und/oder den Luftdruck der Umgebung zu erfassen. Die Sensoreinrichtung ist mit der Steuereinheit verbunden. Auf diese Weise kann die Sensoreinrichtung Daten zu Temperatur und/oder Luftdruck an die Steuereinheit übermitteln und die Steuereinheit kann den Aktuator in Abhängigkeit dieser Daten ansteuern.

Das System umfasst bevorzugt eine Datenbank, in welcher für verschiedene Fahrzeugtypen zumindest eine Kennlinie und/oder zumindest einer der folgenden Parameter hinterlegt ist:
- ein Parameter der Außenkontur des ziehenden Fahrzeugs
- ein Parameter der Außenkontur des gezogenen Fahrzeugs

Die Parameter der Außenkontur sind insbesondere die oben genannten.

Die Steuereinheit ist dann dazu eingerichtet, anhand der Kennlinie oder der Parameter den Aktuator anzusteuern. Beispielsweise kann die Steuereinheit wie oben beschrieben mittels der Winkelmesseinrichtung die Relativorientierung der Fahrzeuge ermitteln und den Aktuator entsprechend einer in der Datenbank gespeicherten Kennlinie ansteuern.

Das erfindungsgemäße System ist insbesondere dazu eingerichtet, das erfindungsgemäße Verfahren auszuführen.

Das erfindungsgemäße Lastkraftwagen-Gespann umfasst ein ziehendes Fahrzeug und ein gezogenes Fahrzeug, wobei das ziehende Fahrzeug und das gezogene Fahrzeug zwischen sich einen Spaltraum bilden und wobei zumindest eine Abdeckung vorgesehen ist, die den Spaltraum zumindest teilweise bedeckt. Das Gespann umfasst ein System gemäß der obigen Beschreibung.

Der Aktuator des Systems ist mit der Abdeckung derart verbunden, dass er die Abdeckung verstellen kann. Der Aktuator ist mit der Steuereinheit derart verbunden, dass die Steuereinheit den Aktuator ansteuern und auf diese Weise die Abdeckung verstellen kann.

Die Abdeckung gelangt bevorzugt automatisch in ihre eingefahrene Position, wenn der Aktuator nicht auf die Abdeckung einwirkt, also beispielsweise stromlos oder drucklos ist. Die Rückstellung der Abdeckung kann über eine Vorspannung, beispielsweise mittels einer Feder, erfolgen.

Die Abdeckung kann mehrere Kammern umfassen, die unabhängig voneinander von dem Aktuator oder mehreren Aktuatoren aufgeblasen werden können. Auf diese Weise kann die Abdeckung nicht nur einen eingefahrenen Zustand und einen ausgefahrenen (aufgeblasenen) Zustand aufweisen, sondern auch mehrere Zustände dazwischen.

Die Abdeckungen bilden gemeinsam bevorzugt eine U-Form, insbesondere ein auf dem Kopf stehendes U aus.

Die Steuereinheit ist bevorzugt mit einem Bremssystem des ziehenden Fahrzeugs verbunden und zum Erfassen des Bremszustands eingerichtet. Auf diese Weise kann mittels der Steuereinheit eine Gefahrbremsung erkannt und der Aktuator daraufhin derart angesteuert werden, dass die Abdeckung eingefahren wird.

Die Steuereinheit ist bevorzugt mit einem Lenksystem des ziehenden Fahrzeugs verbunden und zum Erfassen des Lenkzustands eingerichtet. Insbesondere ist die Steuereinheit zum Erfassen des Lenkwinkels und/oder des Lenkwinkelgradienten des ziehenden Fahrzeuges eingerichtet. Auf diese Weise kann die Steuereinheit den Lenkzustand des Gespanns erfassen und bei der Ansteuerung des Aktuators berücksichtigen.

Die Steuereinheit ist bevorzugt mit einer optischen Erkennungseinrichtung des ziehenden Fahrzeugs, welche zum Erfassen von Verkehrsschildern eingerichtet ist, verbunden. Auf diese Weise kann mittels der Steuereinheit anhand der Verkehrsschilder eine Autobahnfahrt erkannt und der Aktuator daraufhin derart angesteuert werden, dass die Abdeckung ausgefahren wird.

Die Steuereinheit ist bevorzugt mit einem Navigationssystem des ziehenden Fahrzeugs verbunden. Auf diese Weise kann mittels der Steuereinheit anhand der Position des Gespanns eine Autobahnfahrt erkannt und der Aktuator daraufhin derart angesteuert werden, dass die Abdeckung ausgefahren wird.

Das ziehende Fahrzeug ist bevorzugt eine Zugmaschine und das gezogene Fahrzeug ist bevorzugt ein Auflieger. Alternativ ist das ziehende Fahrzeug bevorzugt ein Lastkraftwagen und das gezogene Fahrzeug bevorzugt ein Anhänger. Das ziehende Fahrzeug kann auch eine Kombination aus Zugfahrzeug und Auflieger sein und das gezogene Fahrzeug ein Anhänger.

Das erfindungsgemäße Verfahren sieht insbesondere die Verwendung des erfindungsgemäßen Systems oder des erfindungsgemäßen Lastkraftwagen-Gespanns vor.

Die Erfindung wird nachfolgend anhand der Zeichnungen beispielhaft dargestellt und beschrieben. Es zeigt dabei
- Figur 1: einen Sattelzug in Geradeausfahrt in einer Draufsicht;
- Figur 2: den Sattelzug der Figur 1 in Kurvenfahrt in einer Draufsicht.

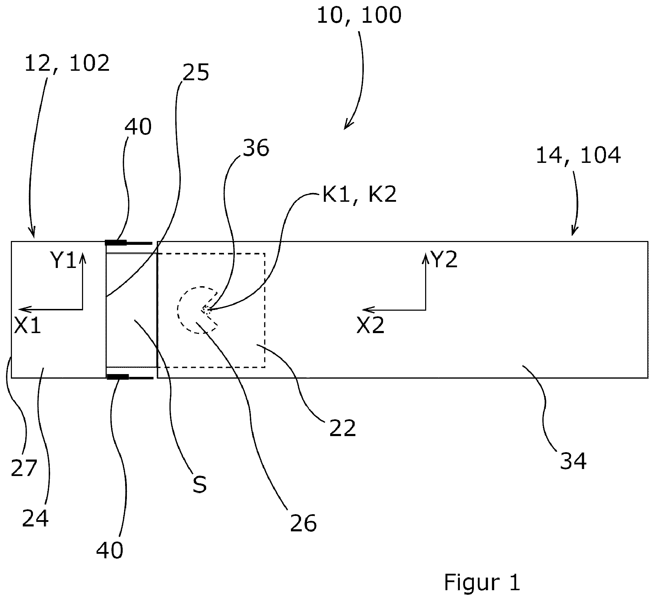

Bei dem in Figur 1 dargestellten Sattelzug 10 handelt es sich um ein Lastkraftwagen-Gespann 100 mit einer Zugmaschine 12 als ziehendes Fahrzeug 102 und einem Auflieger 14 als gezogenes Fahrzeug 104. Die Figur 1 zeigt den Sattelzug 10 schematisch und in Geradeausfahrt.

Die Zugmaschine 12 umfasst ein Chassis 22, ein Fahrerhaus 24 sowie mindestens vier Räder (nicht dargestellt). Die Orientierung der Zugmaschine 12 wird in zwei Dimensionen durch die zwei Achsen X1 und Y1 bestimmt. Die Achse X1 entspricht der Richtung, in welche sich die Zugmaschine 12 bei Geradeausfahrt bewegt. Die Achse Y1 verläuft senkrecht zur Achse X1 und horizontal. Die Achsen X1 und Y1 sind bezüglich der Zugmaschine 12 festgelegt.

Die Zugmaschine 12 umfasst eine Sattelkupplung 26, mittels der sie mit dem Auflieger 14 gekoppelt werden kann. Die Sattelkupplung 26 definiert den Kupplungspunkt K1 der Zugmaschine 12.

Der Auflieger 14 umfasst ein Fahrgestell (nicht sichtbar) und einen Aufbau 34. Der Aufbau 34 ist hier ein Kofferaufbau. Im vorderen Bereich des Aufbaus 34 ist ein Königszapfen 36 angeordnet, der mit der Sattelkupplung 26 zusammenwirkt, um Zugmaschine 12 und Auflieger 14 zu koppeln. Der Königszapfen 36 definiert den Kupplungspunkt K2 des Aufliegers.

Da bei dem Sattelzug 10 die Zugmaschine 12 und der Auflieger 14 gekoppelt sind, liegen die Kupplungspunkte K1, K2 ineinander.

Die Orientierung des Aufliegers 14 wird in zwei Dimensionen durch die zwei Achsen X2 und Y2 bestimmt. Die Achse X2 entspricht der Richtung, in welche sich der Auflieger 14 bei Geradeausfahrt bewegt. Die Achse Y2 verläuft senkrecht zur Achse X2 und horizontal. Die Achsen X2 und Y2 sind bezüglich des Aufliegers 14 festgelegt

Bei der Geradeausfahrt (Figur 1) liegen die Achsen X1 und X2 ineinander und die Achsen Y1 und Y2 verlaufen parallel zueinander.

Zwischen Zugmaschine 12 und Auflieger 14 wird ein Spaltraum S gebildet. Der Spaltraum S führt ohne weitere Maßnahmen zu einer Verwirbelung des Fahrtwindes während der Fahrt des Sattelzugs 10. Dies würde sich nachteilig auf den Kraftstoffverbrauch des Sattelzugs 10 auswirken.

Die Zugmaschine 12 weist zwei Abdeckungen 40 auf. Die Abdeckungen 40 sind an einer Rückwand 25 des Fahrerhauses 24 angeordnet und erstrecken sich in X1-Richtung. Dadurch bedecken oder verschließen die Abdeckungen 40 den Spaltraum S teilweise. Die Abdeckungen 40 sind jeweils mehrteilig und mittels eines nicht dargestellten Aktuators teleskopierbar. Dadurch können die Abdeckungen 40 stufenlos ein- und ausgefahren werden.

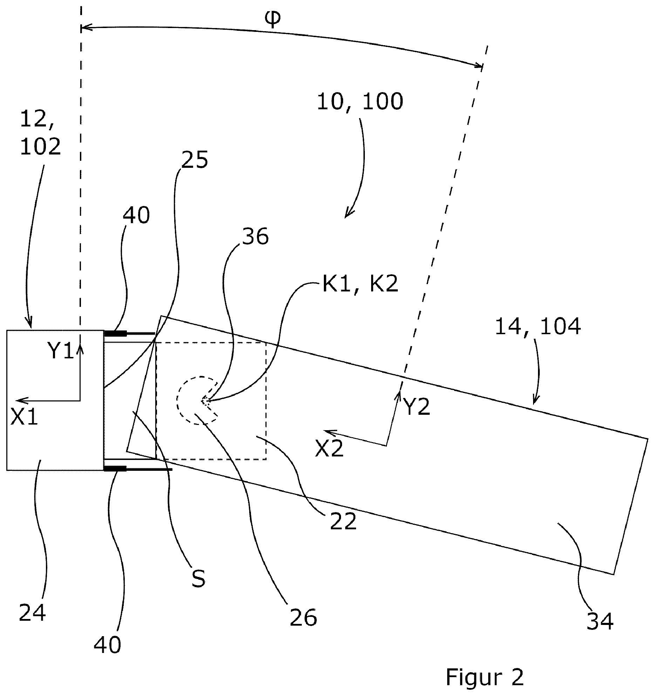

Figur 2 zeigt den Sattelzug 10 in Kurvenfahrt. Durch die Kurvenfahrt verändert sich die Relativorientierung zwischen Zugmaschine 12 und Aufliegers 14. Diese Veränderung wird dadurch sichtbar, dass die Achsen Y1 und Y2 nicht mehr parallel, sondern in einem Winkel φ ≠ 0° (hier etwa 15°) verlaufen. Auch die Relativposition zwischen Zugmaschine 12 und Auflieger 14 hat sich verändert, da die Schwerpunkte von Zugmaschine 12 und Auflieger 14 nicht mehr auf der gemeinsamen X1/X2-Achse liegen. Die Kupplungspunkte K1/K2 liegen weiterhin ineinander. Der Spaltraum S hat sich durch die Kurvenfahrt verändert, ist aber weiterhin vorhanden.

Zur Ermittlung der Relativorientierung und ihrer Veränderung umfasst der Sattelzug 10 eine Winkelmesseinrichtung, die mit einer Steuereinheit der Zugmaschine 12 verbunden ist (beides nicht dargestellt). Die Winkelmesseinrichtung erfasst eine Drehung des Aufliegers 14 um den gemeinsamen Kupplungspunkt K1/K2 relativ zu der Zugmaschine 12. Die Steuereinheit kann anhand dessen die Relativorientierung von Zugmaschine 12 und Auflieger 14 ermitteln.

Die Steuereinheit ist mit den Aktuatoren der Abdeckungen 40 derart verbunden, dass sie die Aktuatoren ansteuern und auf diese Weise die Abdeckungen 40 ein- und ausfahren kann. Die Steuereinheit steuert die Aktuatoren in Abhängigkeit von der Relativorientierung an. In Figur 2 ist zu sehen, dass der Abdeckungen 40 auf der linken Fahrzeugseite im Vergleich mit Figur 1 weiter ausgefahren wurde, damit der Abdeckungen 40 weiterhin näher an den Auflieger 14 heranreicht und den Spaltraum S weitgehend bedeckt. Auf diese Weise kann der Spaltraum auch bei Kurvenfahrt weitgehend verschlossen werden, wodurch Verwirbelungen vermieden und der Kraftstoffverbrauch gesenkt wird.

Die Steuereinheit umfasst eine Datenbank, in welcher für verschiedene Fahrzeugtypen (ziehende und gezogene Fahrzeuge) Kennlinien. Beim Kupplungsvorgang wird ein Input generiert und an die Steuereinheit übermittelt. Durch den Input erhält die Steuereinheit die Information, welche Fahrzeuge miteinander gekuppelt wurden. Dieser Input kann manuell erfolgen. Nach Erhalt des Inputs kann die Steuereinheit die passende Kennlinie aus der Datenbank beziehen und in Folge die Aktuatoren in Abhängigkeit der Kennlinie ansteuern.

### Bezugszeichenliste

- 10: Sattelzug
- 12: Zugmaschine
- 14: Auflieger

- 22: Chassis
- 24: Fahrerhaus
- 25: Rückwand
- 26: Sattelkupplung
- 27: Stirnseite

- 34: Aufbau
- 36: Königszapfen

- 40: Abdeckung

- 100: Lastkraftwagen-Gespann
- 102: ziehendes Fahrzeug
- 104: gezogenes Fahrzeug

- K1: Kupplungspunkt
- K2: Kupplungspunkt

- S: Spaltraum

- X1: Achse
- X2: Achse
- Y1: Achse
- Y2: Achse

## Patentansprüche

1. Verfahren zum Steuern einer Abdeckung (40), die einen Spaltraum (S), welcher zwischen einem ziehenden Fahrzeug (102) und einem gezogenen Fahrzeug (104) eines Lastkraftwagen-Gespanns (100) gebildet wird, zumindest teilweise bedeckt, mittels zumindest eines Aktuators, der zum Verstellen der Abdeckung (40) eingerichtet ist,
**dadurch gekennzeichnet, dass** eine Relativposition und/oder eine Relativorientierung zwischen ziehendem Fahrzeug (102) und gezogenem Fahrzeug (104) ermittelt und der Aktuator in Abhängigkeit von der Relativposition und/oder der Relativorientierung angesteuert wird, wobei zur Ermittlung der Relativposition und/oder der Relativorientierung der Drehwinkel am Kupplungspunkt (K1, K2) zwischen ziehendem Fahrzeug (102) und gezogenem Fahrzeug (104) erfasst wird.

2. Verfahren nach Anspruch 1,
**dadurch gekennzeichnet, dass** zur Ermittlung der Relativposition und/oder der Relativorientierung zumindest einer der folgenden Primärparameter erfasst wird:
- zumindest ein Abstand zwischen den Fahrzeugen (102, 104)
- die absolute Position des ziehenden Fahrzeugs (102)
- die absolute Position des gezogenen Fahrzeugs (104)
- die absolute Orientierung des ziehenden Fahrzeugs (102)
- die absolute Orientierung des gezogenen Fahrzeugs (104)

3. Verfahren nach einem der vorhergehenden Ansprüche,
**dadurch gekennzeichnet, dass** die Ansteuerung des Aktuators in Abhängigkeit zumindest eines der folgenden Sekundärparameter erfolgt:
- ein Parameter der Außenkontur des ziehenden Fahrzeugs (102)
- ein Parameter der Außenkontur des gezogenen Fahrzeugs (104)
- die aktuelle Geschwindigkeit des Gespanns (100)
- die seit Überschreiten eines Grenzwertes der Geschwindigkeit vergangene Zeit
- die Position des Gespanns (100)
- die Temperatur der Umgebung
- der Luftdruck der Umgebung
- der Staudruck an der Stirnseite (27) des ziehenden Fahrzeuges (102)
- der Luftdruck an mindestens einer Flanke des gezogenen Fahrzeugs (104) oder des ziehenden Fahrzeuges (102)
- der Luftdruck im Dachbereich des gezogenen Fahrzeugs (104) oder des ziehenden Fahrzeuges (102)
- der Luftdruck im Spaltraum (S) zwischen dem ziehenden Fahrzeug (102) und dem gezogenen Fahrzeug (104)
- erfasste Verkehrsschilder
- der Bremszustand
- der Lenkzustand,
wobei der Parameter der Außenkontur des ziehenden Fahrzeugs (102) und/oder des gezogenen Fahrzeugs (104) vorzugsweise zumindest einer der folgenden ist:
- Breite des Fahrzeugs (102, 104)
- Höhe des Fahrzeugs (102, 104)
- Form des Fahrzeugs (102, 104)
- Vorhandensein eines Anbaugeräts
- Form des Anbaugeräts
- Größe des Anbaugeräts
- die Position eines Kupplungspunkts (K1, K2) an dem Fahrzeug (102, 104)

4. Verfahren nach einem der vorhergehenden Ansprüche,
**dadurch gekennzeichnet, dass** die Relativposition und/oder die Relativorientierung kontinuierlich ermittelt wird und der Aktuator kontinuierlich in Abhängigkeit von der Relativposition und/oder der Relativorientierung angesteuert wird.

5. Verfahren nach einem der vorhergehenden Ansprüche,
**dadurch gekennzeichnet, dass** mehrere Abdeckungen (40) mit jeweils zumindest einem Aktuator vorgesehen sind, wobei die Aktuatoren unabhängig und/oder unterschiedlich angesteuert werden.

6. Verfahren nach einem der vorhergehenden Ansprüche,
**dadurch gekennzeichnet, dass** der Aktuator derart angesteuert wird, dass die Abdeckung (40) mit einer festgelegten Anpresskraft an dem gezogenen Fahrzeug (104) anliegt, wobei die Anpresskraft vorzugsweise in Abhängigkeit zumindest eines der Sekundärparameter festgelegt wird.

7. System zum Steuern einer Abdeckung (40), die einen Spaltraum (S), welcher zwischen einem ziehenden Fahrzeug (102) und einem gezogenen Fahrzeug (104) eines Lastkraftwagen-Gespanns (100) gebildet wird, zumindest teilweise bedeckt, umfassend zumindest einen Aktuator, der zum Verstellen der Abdeckung (40) eingerichtet ist,
**dadurch gekennzeichnet, dass** das System eine mit dem Aktuator verbundene Steuereinheit umfasst, die eingerichtet ist, eine Relativposition und/oder eine Relativorientierung zwischen ziehendem Fahrzeug (102) und gezogenem Fahrzeug (104) zu ermitteln und den Aktuator in Abhängigkeit der Relativposition und/oder der Relativorientierung anzusteuern, wobei das System eine Winkelmesseinrichtung umfasst, welche die Orientierung von ziehendem Fahrzeug (102) und gezogenem Fahrzeug (104) oder die Relativorientierung von ziehendem Fahrzeug (102) und gezogenem Fahrzeug (104) erfasst.

8. System nach Anspruch 6 oder 7,
**dadurch gekennzeichnet, dass** das System eine Sensoreinrichtung umfasst, welche eingerichtet ist, die Temperatur und/oder den Luftdruck der Umgebung zu erfassen.

9. System nach einem der Ansprüche 6 bis 8,
**dadurch gekennzeichnet, dass** das System eine Datenbank umfasst, in welcher für verschiedene Fahrzeugtypen zumindest eine Kennlinie und/oder zumindest einer der folgenden Parameter hinterlegt ist:
- ein Parameter der Außenkontur des ziehenden Fahrzeugs (102)
- ein Parameter der Außenkontur des gezogenen Fahrzeugs (104)

10. Lastkraftwagen-Gespann (100) mit einem ziehenden Fahrzeug (102) und einem gezogenen Fahrzeug (104), wobei das ziehende Fahrzeug (102)und das gezogene Fahrzeug (104) zwischen sich einen Spaltraum (S) bilden und wobei zumindest eine Abdeckung (40) vorgesehen ist, die den Spaltraum (S) zumindest teilweise bedeckt,
**gekennzeichnet durch** ein System gemäß einem der Ansprüche 6 bis 9, wobei die Steuereinheit vorzugsweise mit einem Bremssystem des ziehenden Fahrzeugs (102) verbunden ist und zum Erfassen des Bremszustands eingerichtet ist.

11. Lastkraftwagen-Gespann (100) nach Anspruch 10,
**dadurch gekennzeichnet, dass** die Steuereinheit mit einem Lenksystem des ziehenden Fahrzeugs (102) verbunden ist und zum Erfassen des Lenkzustands eingerichtet ist.

12. Lastkraftwagen-Gespann (100) nach einem der Ansprüche 10 oder 11, **dadurch gekennzeichnet, dass** die Steuereinheit mit einer optischen Erkennungseinrichtung des ziehenden Fahrzeugs (102), welche zum Erfassen von Verkehrsschildern eingerichtet ist, verbunden ist.

13. Lastkraftwagen-Gespann (100) nach einem der Ansprüche 10 bis 12,
**dadurch gekennzeichnet, dass** die Steuereinheit mit einem Navigationssystem des ziehenden Fahrzeugs (102) verbunden ist.

14. Lastkraftwagen-Gespann (100) nach einem der Ansprüche 10 bis 13,
**dadurch gekennzeichnet, dass** das ziehende Fahrzeug (102) eine Zugmaschine (12) und das gezogene Fahrzeug (104) ein Auflieger (14) ist oder dass das ziehende Fahrzeug (102) ein Lastkraftwagen und das gezogene Fahrzeug (104) ein Anhänger ist.

## Claims

1. A method for controlling a cover (40) which at least partially covers a gap (S) formed between a pulling vehicle (102) and a pulled vehicle (104) of a truck-trailer combination (100), by means of at least one actuator which is arranged to adjust the cover (40), **characterized in that** a relative position and/or a relative orientation between the pulling vehicle (102) and the pulled vehicle (104) is determined and the actuator is controlled depending on the relative position and/or the relative orientation, wherein in order to determine the relative position and/or the relative orientation, the angle of rotation at the coupling point (K1, K2) between the pulling vehicle (102) and the pulled vehicle (104) is determined.

2. The method according to claim 1,
**characterized in that**, in order to determine the relative position and/or the relative orientation, at least one of the following primary parameters is determined:
- at least one distance between the vehicles (102, 104)
- the absolute position of the pulling vehicle (102)
- the absolute position of the pulled vehicle (104)
- the absolute orientation of the pulling vehicle (102)
- the absolute orientation of the pulled vehicle (104).

3. The method according to any of the preceding claims,
**characterized in that** the actuator is controlled depending on at least one of the following secondary parameters:
- a parameter of the outer contour of the pulling vehicle (102)
- a parameter of the outer contour of the pulled vehicle (104)
- the current speed of the combination (100)
- the time elapsed since a speed limit value was exceeded
- the position of the combination (100)
- the temperature of the environment
- the air pressure of the environment
- the dynamic pressure at the front side (27) of the pulling vehicle (102)
- the air pressure on at least one flank of the pulled vehicle (104) or the pulling vehicle (102)
- the air pressure in the roof area of the pulled vehicle (104) or of the pulling vehicle (102)
- the air pressure in the gap (S) between the pulling vehicle (102) and the pulled vehicle (104)
- traffic signs determined
- the braking condition
- the steering condition
wherein the parameter of the outer contour of the pulling vehicle (102) and/or the pulled vehicle (104) is preferably at least one of the following:
- width of the vehicle (102, 104)
- height of the vehicle (102, 104)
- shape of the vehicle (102, 104)
- presence of an accessory device
- shape of the accessory device
- size of the accessory device
- the position of a coupling point (K1, K2) on the vehicle (102, 104).

4. The method according to any one of the preceding claims,
**characterized in that** the relative position and/or the relative orientation is continuously determined and the actuator is continuously controlled depending on the relative position and/or the relative orientation.

5. The method according to one of the preceding claims,
**characterized in that** a plurality of covers (40) each having at least one actuator are provided, wherein the actuators are controlled independently and/or differently.

6. The method according to one of the preceding claims,
**characterized in that** the actuator is controlled in such a way that the cover (40) abuts the pulled vehicle (104) with a fixed contact force, wherein the contact force is determined depending on at least one of the secondary parameters.

7. A system for controlling a cover (40) that at least partially covers a gap (S) formed between a pulling vehicle (102) and a pulled vehicle (104) of a truck-trailer combination (100), comprising at least one actuator arranged to adjust the cover (40),
**characterized in that** the system comprises a control unit connected to the actuator, arranged to determine a relative position and/or a relative orientation between the pulling vehicle (102) and the pulled vehicle (104) and to control the actuator depending on the relative position and/or the relative orientation, wherein the system comprises an angular measurement device that senses the orientation of the pulling vehicle (102) and pulled vehicle (104) or the relative orientation of the pulling vehicle (102) and pulled vehicle (104).

8. The system according to claim 6 or 7,
**characterized in that** the system comprises a sensor device arranged to sense temperature and/or atmospheric pressure of the environment.

9. The system according to any one of claims 6 to 8,
**characterized in that** the system comprises a database in which at least one characteristic curve and/or at least one of the following parameters is stored for different vehicle types:
- a parameter of the outer contour of the pulling vehicle (102)
- a parameter of the external contour of the pulled vehicle (104).

10. A truck-trailer combination (100) comprising a pulling vehicle (102) and a pulled vehicle (104), wherein the pulling vehicle (102) and the pulled vehicle (104) form a gap (S) in between, and wherein at least one cover (40) is provided which at least partially covers the gap (S),
**characterized by** a system according to any one of claims 6 to 9, wherein the control unit is preferably connected to a braking system of the pulling vehicle (102) and is arranged to determine the braking state.

11. The truck-trailer combination (100) according to claim 10,
**characterized in that** the control unit is connected to a steering system of the pulling vehicle (102) and is arranged to determine the steering state.

12. The truck-trailer combination (100) according to any one of claims 10 or 11,
**characterized in that** the control unit is connected to an optical recognition device of the pulling vehicle (102), which is arranged to detect traffic signs.

13. The truck-trailer combination (100) according to any one of claims 10 to 12,
**characterized in that** the control unit is connected to a navigation system of the pulling vehicle (102).

14. The truck-trailer combination (100) according to any one of claims 10 to 13,
**characterized in that** the pulling vehicle (102) is a tractor (12) and the pulled vehicle (104) is a semitrailer (14), or **in that** the pulling vehicle (102) is a truck and the pulled vehicle (104) is a trailer.

## Revendications

1. Procédé de commande d'un cache (40) recouvrant au moins partiellement un espace (S) formé entre un véhicule tracteur (102) et un véhicule tracté (104) d'un attelage de camion (100), au moyen d'au moins un actionneur conçu pour déplacer le cache (40),
**caractérisé en ce que** l'on détermine une position relative et/ou une orientation relative entre le véhicule tracteur (102) et le véhicule tracté (104) et que l'on commande l'actionneur en fonction de la position relative et/ou de l'orientation relative, l'angle de rotation au niveau du point d'attelage (K1, K2) entre le véhicule tracteur (102) et le véhicule tracté (104) étant détecté afin de déterminer la position relative et/ou l'orientation relative.

2. Procédé selon la revendication 1,
**caractérisé en ce que,** afin de déterminer la position relative et/ou l'orientation relative, on détecte au moins un des paramètres primaires ci-après :
- au moins une distance entre les véhicules (102, 104)
- la position absolue du véhicule tracteur (102)
- la position absolue du véhicule tracté (104)
- l'orientation absolue du véhicule tracteur (102)
- l'orientation absolue du véhicule tracté (104).

3. Procédé selon l'une des revendications précédentes,
**caractérisé en ce que** la commande de l'actionneur intervient en fonction d'au moins un des paramètres secondaires ci-après :
- un paramètre du contour extérieur du véhicule tracteur (102)
- un paramètre du contour extérieur du véhicule tracté (104)
- la vitesse effective de l'attelage (100)
- le temps écoulé depuis le dépassement d'une valeur limite de vitesse
- la position de l'attelage (100)
- la température de l'environnement
- la pression atmosphérique de l'environnement
- la pression dynamique à l'avant (27) du véhicule tracteur (102)
- la pression atmosphérique sur au moins un flanc du véhicule tracté (104) ou du véhicule tracteur (102)
- la pression atmosphérique dans la région de toit du véhicule tracté (104) ou du véhicule tracteur (102)
- la pression atmosphérique dans l'espace (S) entre le véhicule tracteur (102) et le véhicule tracté (104)
- les panneaux de signalisation détectés
- l'état de freinage
- l'état de direction,
dans lequel le paramètre du contour extérieur du véhicule tracteur (102) et/ou du véhicule tracté (104) est de préférence au moins un paramètre parmi les paramètres ci-après :
- largeur du véhicule (102, 104)
- hauteur du véhicule (102, 104)
- forme du véhicule (102, 104)
- présence d'un équipement accessoire
- forme de l'équipement accessoire
- taille de l'équipement accessoire
- position d'un point d'attelage (K1, K2) sur le véhicule (102, 104).

4. Procédé selon l'une des revendications précédentes,
**caractérisé en ce que** l'on détermine la position relative et/ou l'orientation relative en continu et que l'on commande l'actionneur en continu en fonction de la position relative et/ou de l'orientation relative.

5. Procédé selon l'une des revendications précédentes,
**caractérisé en ce que** plusieurs caches (40) sont prévus avec respectivement au moins un actionneur, les actionneurs étant commandés de manière indépendante et/ou de manière différente.

6. Procédé selon l'une des revendications précédentes,
**caractérisé en ce que** l'actionneur est commandé de façon telle que le cache (40) repose avec une force de pression déterminée sur le véhicule tracté (104), la force de pression étant de préférence déterminée en fonction d'au moins un des paramètres secondaires.

7. Procédé de commande d'un cache (40) recouvrant au moins partiellement un espace (S) formé entre un véhicule tracteur (102) et un véhicule tracté (104) d'un attelage de camion (100), comprenant au moins un actionneur conçu pour déplacer le cache (40),
**caractérisé en ce que** le système comprend une unité de commande reliée à l'actionneur et conçue pour déterminer une position relative et/ou une orientation relative entre le véhicule tracteur (102) et le véhicule tracté (104) et pour commander l'actionneur en fonction de la position relative et/ou de l'orientation relative, dans lequel le système comprend un dispositif de mesure d'angle qui détecte l'orientation du véhicule tracteur (102) et du véhicule tracté (104) ou l'orientation relative du véhicule tracteur (102) et du véhicule tracté (104).

8. Système selon la revendication 6 ou 7,
**caractérisé en ce que** le système comprend un dispositif de détection qui est conçu pour détecter la température et/ou la pression atmosphérique de l'environnement.

9. Système selon l'une des revendications 6 à 8,
**caractérisé en ce que** le système comprend une base de données dans laquelle sont stockés, pour différents types de véhicules, au moins une courbe caractéristique et/ou au moins un des paramètres ci-après :
- un paramètre du contour extérieur du véhicule tracteur (102)
- un paramètre du contour extérieur du véhicule tracté (104)

10. Attelage de camion (100) comprenant un véhicule tracteur (102) et un véhicule tracté (104), dans lequel le véhicule tracteur (102) et le véhicule tracté (104) forment entre eux un espace (S) et dans lequel est prévu au moins un cache (40) recouvrant au moins partiellement l'espace (S), **caractérisé par** un système selon l'une des revendications 6 à 9, dans lequel l'unité de commande est de préférence reliée à un système de freinage du véhicule tracteur (102) et est conçue pour détecter l'état de freinage.

11. Attelage de camion (100) selon la revendication 10, **caractérisé en ce que** l'unité de commande est reliée à un système de direction du véhicule tracteur (102) et est conçue pour détecter l'état de direction.

12. Attelage de camion (100) selon l'une des revendications 10 ou 11, **caractérisé en ce que** l'unité de commande est reliée à un dispositif de détection optique du véhicule tracteur (102) qui est conçu pour détecter les panneaux de signalisation.

13. Attelage de camion (100) selon l'une des revendications 10 à 12, **caractérisé en ce que** l'unité de commande est reliée à un système de navigation du véhicule tracteur (102).

14. Attelage de camion (100) selon l'une des revendications 10 à 13, **caractérisé en ce que** le véhicule tracteur (102) est un tracteur routier (12) et le véhicule tracté (104) est une semi-remorque (14) ou **en ce que** le véhicule tracteur (102) est un camion et le véhicule tracté (104) est une remorque.
